Europäisches Patentamt

European Patent Office

Office européen des brevets

(19)

(11) Publication number: **0 239 312 B1**

(12) EUROPEAN PATENT SPECIFICATION

(45) Date of publication of patent specification: **29.05.91**

(51) Int. Cl.⁵: **D21C 9/06**, B01D 33/09, B01D 33/13

(21) Application number: **87302303.0**

(22) Date of filing: **18.03.87**

(54) Method and apparatus for washing pulp.

(30) Priority: **20.03.86 FI 861167**

(43) Date of publication of application:
**30.09.87 Bulletin 87/40**

(45) Publication of the grant of the patent:
**29.05.91 Bulletin 91/22**

(84) Designated Contracting States:
**AT FR SE**

(56) References cited:
**FR-A- 2 447 419**
**FR-A- 2 531 982**
**US-A- 4 292 123**
**US-A- 4 491 501**

(73) Proprietor: **A. AHLSTROM CORPORATION**

**SF-29600 Noormarkku(FI)**

(72) Inventor: **Kokkonen, Seppo**
**Vipusenkatu 4 C 20**
**SF-57200 Savonlinna(FI)**
Inventor: **Qvintus, Harri**
**Paivakummunkaari 8 B**
**SF-57230 Savonlinna(FI)**

(74) Representative: **Gilmour, David Cedric Franklyn et al**
**POTTS, KERR & CO. 15 Hamilton Square Birkenhead Merseyside L41 6BR(GB)**

## Description

The present invention relates to a method and an apparatus for washing pulp, according to which method a substantially continuous layer of pulp is supplied onto a movable, liquid-pervious support surface and washing liquid is supplied to the pulp layer and fed through different areas of the layer in several successive washing phases in such a way that the washing liquid gradually flows in the opposite direction relative to the direction of movement of the layer.

A method as described above is disclosed for example by FI patent specifications no. 56564, 56865 and 71961. The washing apparatus of these specifications employs a rotating cylinder surrounded by a stationary shell, and the pulp to be washed flows in a substantially continuous web between the casing surface of the cylinder and the shell. The pulp is supplied onto the cylinder at a predetermined inlet point and is discharge from it at an outlet point further on in the rotating direction, whilst the washing liquid is supplied to the last washing stage close to the outlet of the pulp, from which stage the washing liquid gradually flows through successive washing stages in the direction opposite to the flow direction of the pulp and is discharge to a discharge pipe close to the pulp inlet point.

Several successive washing stages are necessary in the washing of pulp as channels are formed in the pulp layer and the washing efficiency of the washing liquid thus falls. Each stage, however, increases, the time required for washing the pulp and thus reduces the capacity of the washing plant.

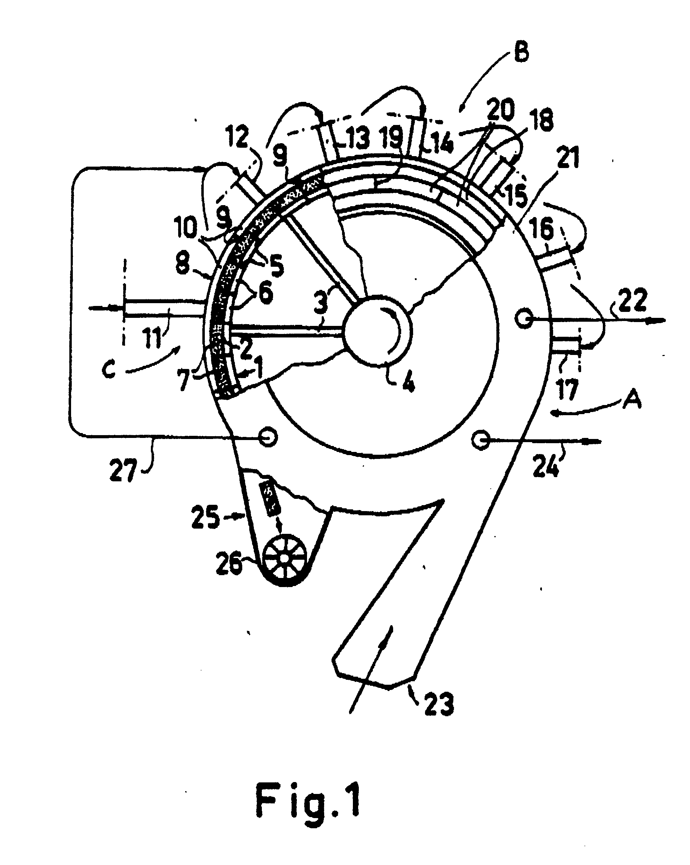

US 4,491,501 Klein discloses a method for washing a fibrous particle mat in connection with a rotary vacuum filter and in Fig. 1 thereof there are shown four washing stages W 1 to W 4 requiring four separate filter drums A countercurrent washing method is involved in which fresh washing liquid is sprayed on and through the pulp mat in the last/fourth washing stage, the filtrate is sprayed on and through the third washing stage etc. In spite of the fact that the first washing liquid and the filtrates are divided into two partial flows the filtrate of a filter drum is collected in a single trough. Klein has not appreciated and utilized the present inventive concept that the filtrates received from different locations of each drum have different concentrations and thus he has not been able to utilize this phenomena.

US 4,292,123 Enso-Gutzeit OY discloses a washing method and apparatus, which is similar to Klein's method arranged to be performed with only one filter drum. The flow path of the filtrate is equivalent to Klein. The fresh washing liquid is introduced into the last washing stage, wherefrom the filtrate is fed to the preceding washing stage and so on. The number of washing stages equals the number of penetrations by the washing liquid.

US 4,502,171 Koskinen discloses a drum type washer in which washer several washing stages arranged in such a way that the washing liquid is led from a washing stage to another counter to the rotation of the drum. The washing liquid is used to displace the fluid in the suspension so that the total amount of washing liquid penetrates through the suspension as many times as is the number of stages. Koskinen does not give any teachings for dividing the washing liquid into several partial flows after the first washing stage (with respect to the washing liquid or the last washing stage with respect to the suspension).

It is an object of the present invention to provide a method according to which the pulp still is washed in several successive stages but which improves the efficiency and the speed of the washing compared with known methods, without impairing the effectiveness of the washing. A characteristic feature of the invention is that a washing stage is divided into two or more washing sections or phases by means of dividing the washing liquid into two or more partial flows passing through said washing stage and the washing liquid is thus divided into two or more partial flows which pass through the washing phases alternately in such a way that the washing liquid which has passed through the pulp layer flows past at least the washing phase preceding it in the flow direction of the pulp layer. In other words the washing liquid is fed to the preceding washing stage and to washing phase thereof.

According to the present invention there is provided a method of washing pulp in which the pulp is supplied onto a moving liquid-pervious support surface in a substantially continuous layer and in which the washing liquid is supplied to said pulp layer for displacing liquid from the pulp layer in several successive washing stages in such a way that the main flow direction of the washing liquid is opposite to the flow direction of the pulp, characterized in that at least some of said washing stages are divided in at least two washing sections in such a way that the washing liquid is divided in the last such washing stage into two or more partial flows which are arranged to displace the liquid in the pulp layer in said washing sections where the partial flows collected separately from said washing sections have different degrees of cleanliness (different concentrations), that the partial flows thus collected are arranged to pass by at least the washing section preceding them in the flow direction of the pulp layer in such a way that the partial flows are introduced in the preceding washing stage and each portion of the washing liquid is arranged to displace the liquid from the pulp layer in the washing section of its own.

Thus, according to the invention, the washing liquid to be used can be divided for example in two partial flows each of which flows through every other two washing phases whereby there are two washing phases within a washing stage so as to pass the liquid through all the successive washing phases. Where the liquid is divided in the last washing phases where the liquid is clean, the cleaner washing liquid fraction is led to the later phase of the previous stage in which the pulp is cleaner, and the fraction containing more impurities is led to the earlier phase of the previous stages in which the pulp is dirtier.

Also according to the present invention there is provided apparatus for washing pulp utilizing a displaceable, liquid-pervious support surface for supporting a substantially continuous layer of pulp to be washed and means for supplying washing liquid to the pulp layer and for feeding such liquid through different areas of the layer in several successive washing stages in such a way that, in use, the washing liquid gradually flows in the opposite direction relative to the direction of movement of the layer, wherein at least one inlet pipe for the washing liquid is connected close to the discharge point for the pulp which has been washed, compartments are disposed under the support surface and in which compartments, in use, the washing liquid seeping through the pulp is collected; a ducting system which is connected to the compartments including pipes which communicate with different compartments and are connected to various feed stations or regions above the support surface so as to feed the washing liquid during operation in successive washing stages at said regions whereby the liquid flows in the direction mainly opposite the flow direction of the pulp, and a discharge pipe via which the washing liquid is discharged from the apparatus; characterized in that the pipes connect the compartments under the support surface and the regions above the support surface so that groups of the pipes interconnect the compartments for collecting the washing liquid from different sections (phases) of a washing stage with the regions for introducing the washing liquid onto the pulp layer in the preceding washing stage in such a way that each pipe of a group beginning from the last section of said washing stage leads to the last section of the preceding washing stage and each pipe beginning from the next to last section leads to the next to the last section of the preceding washing stage, and so on correspondingly.

The washing of pulp is according to the invention preferably carried out by a rotating cylinder the casing surface of which serves as the liquid-pervious support surface for the pulp. However, an apparatus in which the pulp supporting surface is disposed in a level, e.g. a horizontal movable endless wire, can be used.

In a preferred embodiment of the invention the apparatus for washing pulp comprises a rotary cylinder having a liquid-pervious casing surface forming said liquid pervious support surface, a stationary shell extends parallel with the shaft of the cylinder and surrounds the cylinder so as to allow the pulp to flow in said continuous layer between the shell and the cylinder carried by said casing surface and through which shell the washing liquid can be supplied to the pulp layer, said at least one inlet pipe for the washing liquid being connected to the shell close the the discharge point for the pulp having been washed; said compartments being disposed under the casing surface of the cylinder in which compartments the washing liquid seeping through the pulp is collected; and a valve system, which is connected to the compartments and comprises a rotary part rotatable with the cylinder and a stationary part disposed against said rotary part; said pipes beginning from said stationary part, communicate during operation with different compartments of the cylinder and are connected to various points in the shell surrounding the cylinder so as to feed the washing liquid during operation in successive washing stages at said points whereby the liquid flows in the direction mainly opposite to the flow direction of the pulp; and said discharge pipe beginning from said stationary part, via which pipe the washing liquid is discharged from the apparatus, characterized in that the pipes connect by means of the valve system both the compartments and the shell so that pipes connect the compartments for collecting the washing liquid from different sections of a washing stage with the compartments introducing the washing liquid onto the pulp layer in the preceding washing stage in such a way that each pipe beginning from the last section of said washing stage leads to the last section of the preceding washing stage and each pipe beginning from the next to the last section leads to the next to the last section of the preceding washing stage, and so on.

The invention is described further below, by way of example, with reference to the accompanying drawings, in which:-

Fig. 1 is a schematical end view of a washing apparatus forming an embodiment or the invention and being in partial sections A, B and C of Fig. 3 showing different areas;

Fig. 2 is a view of one and of the apparatus of Fig. 1 from the same direction of viewing; and

Fig. 3 is a longitudinal section of the apparatus.

The washing apparatus illustrated has a rotary cylinder surrounded by a stationary shell. The cylinder and its shell are substantially similar to the ones disclosed in Finnish patent specification no. 71961. The differences are to be found mainly in the pipes between the valve system and the shell, which are described further below.

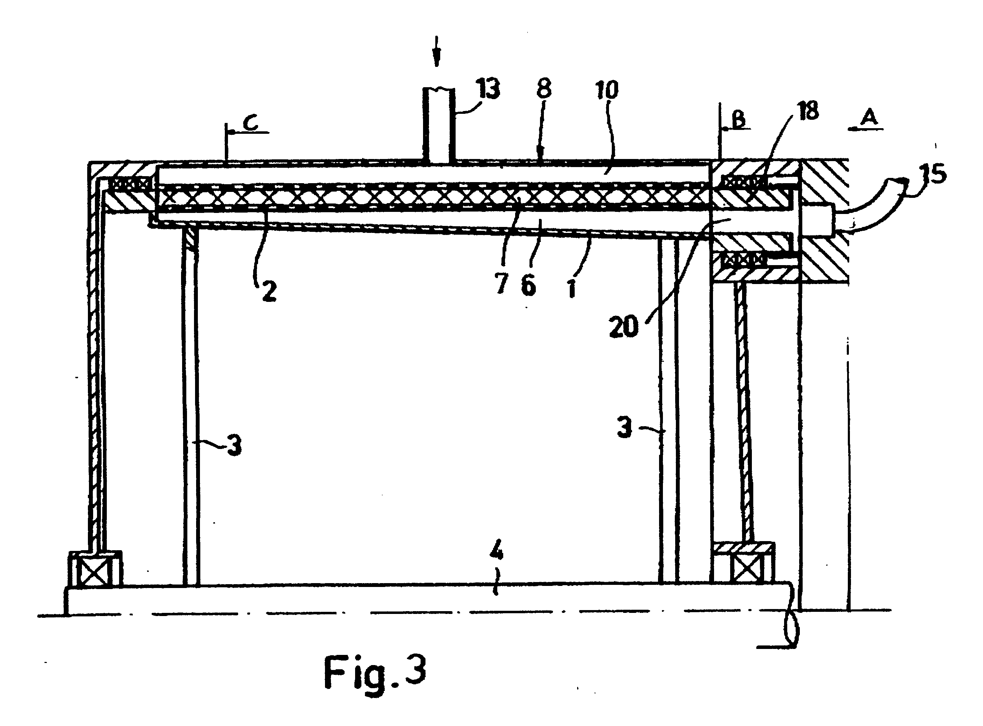

The disclosed apparatus comprises, as Fig. 1 shows, a cylindrical drum 1, having a casing surface 2 which is connected via radial rode 3 to a horizontal shaft 4. The casing surface 2 is preferably a liquid-pervious perforated plate. Under, i.e. radially inwardly of the casing surface 2 there are longitudinal compartments 6 which are separated from each other by intermediate walls 5 which are parallel with the shaft 4 of the drum. The bottoms of the compartments incline towards the other end of the drum which is illustrated in Fig. 3. The intermediate walls 5 extend [as shown in Fig. 1) outside, i.e. radially outwardly of the casing surface 2 of the drum so that the pulp to be washed which is supplied onto the casing surface 2, is divided into substantially rectangular strips or cakes 7.

The drum 1 which rotates about its shaft 4 in the direction indicated by the arrow in Fig. 1 is surrounded by a stationary substantially cylindrical shell 8 which extends parallel to the shaft 4 of the drum. The shell 8 has compartments, 10 which are defined by intermediate walls 9 [as shown in Fig. 1) which walls are parallel with the shaft 4 of the drum, each compartment being provided with a feed pipe 11 to 17 for the liquid used for washing the pulp. The bottom of radially inward sides of the compartments 10 arranged against the pulp layer 7, which is to be washed and is supported by the casing surface 2, is made of a liquid-pervious perforated plate.

The operational principle of the apparatus of the present invention is to feed the washing liquid several times through the pulp layer 7 supplied onto the casing surface 2 of the drum with the washing liquid gradually flowing through the whole washing apparatus and progressing generally in the direction opposite to the direction of rotation of the drum. To achieve this, the apparatus is provided with a valve system at the other end of the drum 1, which system communicates via orifices with the compartments 6 under the casing surface 2 of the drum, to which compartment the washing liquid passed through the pulp layer is collected. The valve system comprises an annular part 18 which is a direct extension of the compartments 6 and is stationarily fixed with the drum 1 and rotates with it. Part 18 defines an annular space divided by seals or intermediate walls 19 into compartments 20 so as to connect each compartment 20 with several adjacent compartments 6. Further, the valve system comprises an annular stationary part 21, which is disposed against said part 18 connected to the drum 1, and which is stationarily fixed with the shell 8 surrounding the drum 1, and from which said feed pipes 12 to 17 for the washing liquid communicating with the compartments 10 in the shell begin. Further, pipe 22 serving as the discharge pipe for the washing liquid, extends from said part 21.

Fig. 3 shows that the washing liquid coming from duct 13 is spread all over compartment 10 and flows radially inwardly through pulp 7 carried by casing surface 2 into compartment 6. The compartment 6 is inclined towards the axis of the apparatus and towards the valve arrangement where the compartment 20 is located.

The pulp to be washed in the apparatus is supplied as a fibre stock of a consistency of approx. 1 to 10 % through the inlet 23 onto the casing surface 2 of the drum 1. At this stage a part of the liquid contained in the stock is separated and removed by said valve system to discharge pipe 24. Thus a fibre layer 7 with solids content of approx. 8 to 12 % is produced on the casing surface 2 of the drum. This layer 7 is transported by the drum 1 between the drum and the shell 8 through successive washing phases to a discharge end 25 for discharge of the washed pulp and at which end the pulp is detached from the casing surface of the drum for example by pneumatic blast and discharged to a gutter 26. The washing liquid removed from the pulp between the last washing phase and the pulp discharge point is guided via the valve system to a pipe 27 which guides it to a previous washing phase as described further below.

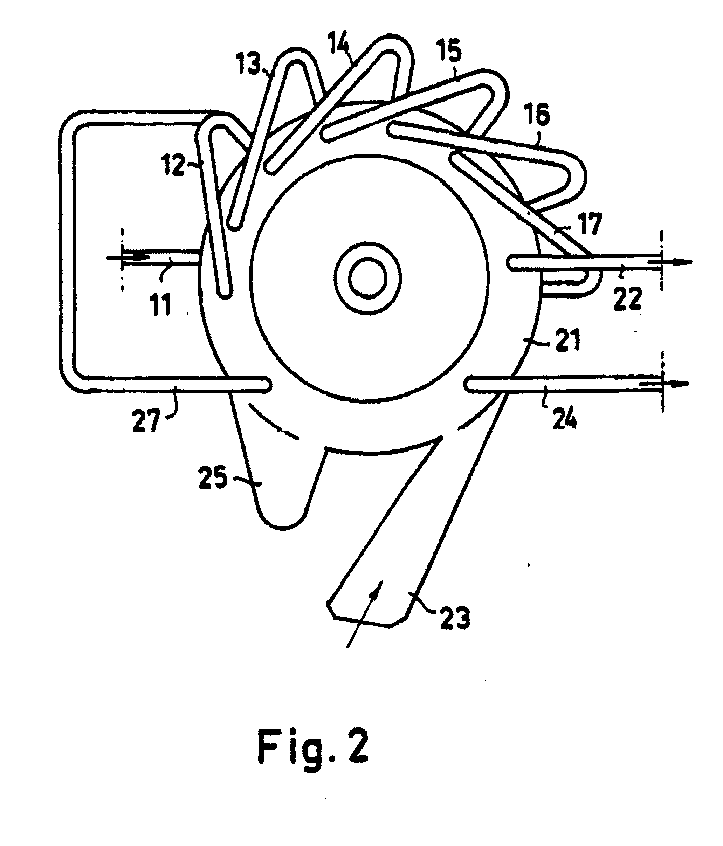

In the washing of the pulp layer 7, washing liquid is fed via the inlet pipe 11 to the compartment 10 which is close to the pulp discharge end 25 in the shell 8. This compartment, the size of rich is approximately twice the size of the other compartments 10 in the shell 8, covers the area of the last washing stage i.e. the two washing sections of the last washing stage of pulp. The washing liquid supplied to the compartment 10 is caused to flow through the perforated bottom of the compartment 10 to the pulp layer 7 and further through the pulp fibre layer 7 in that region and through the perforated bottom of the pulp treating compartment i.e. casing surface 2 of the drum to compartment 6 for collecting the washing liquid. From the compartments 6 the washing liquid flows to two compartments 20 in the same area in the part 18 of the valve system connected to the drum. From compartments 20 the washing liquid flows further to two pipes 12 and 13 (cf. Fig. 2) beginning and leading from the stationary part 21 of the valve system. Thus the washing liquid is divided into two partial flows, one of which, viz. the one passed (in pipe 12) through the last washing phase, is cleaner than the other one, viz. the partial flow passed (in pipe 13) through the penultimate washing phase of the last washing stage. The pipes 12 and 13 pass the partial flows of washing liquid to the two preceding next compartments in the shell 8 defining the preceding washing stage, in the range of which the preceding washing sections of the preceding washing stage are carried out. As Fig. 2 shows, the washing liquid from the last washing phase is supplied via pipe 12 and the washing liquid separated from the pulp after the washing phases is supplied via pipe 27, to the later one of said two sections of the preceding washing stage and thus it washes in that section cleaner pulp than the more contaminated washing liquid which is received from the penultimate washing section of the last washing stage and is supplied via pipe 13 to the earlier one of said washing sections of the preceding washing stage. After this the washing continues according to the same principle and the partial flows of washing liquid pass alternately through successive washing sections in such a way that the washing liquid which has in a section of one stage passed through the pulp layer 7 flows past the washing section immediately adjacent to said section in the flow direction of the pulp; thus each partial flu passes through every two washing sections but through every washing stage. Finally, the washing liquid is collected from the two sections of the first washing stage i.e. the washing stage next to the pulp inlet 23 to a discharge pipe 22.

The washing liquid may be divided in three or more separate partial flows, which are brought according to the presented principle alternately to different washing phases. Also, the alternation of the partial flows of this invention need not extend to the whole washing process but can be combined for example with the method disclosed in Finnish Patent No. 71961 according to which the washing liquid passes in one undivided flow from one washing stage to another. Also the construction of the apparatus used in the washing can be different from the one presented in the above example. For example a cylinder as disclosed in Finnish Patent Specifications Nos. 56564 and 56865 can be used, in which the compartments, disposed under the casing surface of the cylinder and collecting the washing liquid, are connected via pipes to a valve system provided immediately about the shaft of the drum.

## Claims

1. Method of washing pulp in which the pulp is supplied onto a moving liquid-pervious support surface (2) in a substantially continuous layer and in which the washing liquid is supplied to said pulp layer for displacing liquid from the pulp layer in several successive washing stages (10) in such a way that the main flow direction of the washing liquid is opposite to the flow direction of the pulp, characterized in that at least some of said washing stages are divided in at least two washing sections in such a way that the washing liquid is divided in the last such washing stage into two or more partial flows which are arranged to displace the liquid in the pulp layer in said washing sections where the partial flows collected separately from said washing sections have different degrees of cleanliness (different concentrations), that the partial flows thus collected are arranged to pass by at least the washing section preceding them in the flow direction of the pulp layer in such a way that the partial flows are introduced in the preceding washing stage and each portion of the washing liquid is arranged to displace the liquid from the pulp layer in the washing section of its own.

2. Method as claimed in claim 1, characterized in that said washing liquid is divided into portions before or during the last washing stage whereby all the washing stages are divided into washing sections.

3. Method as claimed in claim 1, characterized in that the portions of washing liquid collected after the first washing stage are collected together.

4. Method as claimed in claim 1, characterized in that said washing liquid is divided into three portions.

5. Method as claimed in claim 1, characterized in that the washing is carried out with a rotating cylinder (1), the casing surface (2) of which serves as the liquid-pervious support surface for the pulp.

6. Apparatus for washing pulp utilizing the method of claim 1 comprising a displaceable, liquid-pervious support surface (2) for supporting a substantially continuous layer of pulp to be washed and means for supplying washing liquid to the pulp layer and for feeding such liquid' through different areas of the layer in several successive washing stages in such a way that, in use, the washing liquid gradually flows in the opposite direction relative to the direction of movement of the layer, wherein at least one inlet pipe (11) for the washing liquid is connected close to the discharge point for the pulp which has been washed, compartments (6) are disposed under the support surface (2) and in which compartments, in use, the washing liquid seeping through the pulp is collected; a ducting system which is connected to the compartments (6) including pipes (12 to 17) which communicate with different compartments (6) and are connected to various feed stations or regions (10) above the support surface (2) so as to feed the washing liquid during operation in successive washing stages at said regions (10) whereby the liquid flows in the direction mainly opposite the flow direction of the pulp, and a discharge pipe (22) via which the washing liquid is discharged from the apparatus; characterized in that the pipes (12 to 17) connect the compartments (6) under the support surface (2) and the regions (10) above the support surface (2) so that groups of the pipes (12, 13; 14, 15; 16, 17) interconnect the compartments (6) for collecting the washing liquid from different sections (phases) of a washing stage with the regions (10) for introducing the washing liquid onto the pulp layer in the preceding washing stage in such a way that each pipe (12; 14; 16) of a group beginning from the last section of said washing stage leads to the last section of the preceeding washing stage and each pipe (13; 15; 17) beginning from the next to last section leads to the next to the last section of the preceding washing stage, and so on correspondingly.

7. Apparatus as claimed in claim 6, comprising a rotary cylinder (1) having a liquid-pervious casing surface (2) forming said liquid pervious support surface; a stationary shell(8) extends parallel with the shaft (4) of the cylinder and surrounds the cylinder so as to allow the pulp to flow in said continuous layer (7) between the shell (8) and the cylinder carried by said casing surface (2) and through which shell (8) the washing liquid can be supplied to the pulp layer, said at least one inlet pipe (11) for the washing liquid being connected to the shell close the the discharge point for the pulp having been washed; said compartments (6) being disposed under the casing surface (2) of the cylinder in which compartments the washing liquid seeping through the pulp is collected; and a valve system, which is connected to the compartments (6) and comprises a rotary part (18) rotatable with the cylinder and a stationary part (21) disposed against said rotary part; said pipes (12 to 17) beginning from said stationary part (21), communicate during operation with different compartments (6) of the cylinder and are connected to various points in the shell (8) surrounding the cylinder (1) so as to feed the washing liquid during operation in successive washing stages at said points whereby the liquid flows in the direction mainly opposite to the flow direction of the pulp; and said discharge pipe (22) beginning from said stationary part (21), via which pipe the washing liquid is discharged from the apparatus, characterized in that the pipes (12 to 17) connect by means of the valve system both the compartments (6) and the shell (8) so that pipes (12,13; 14,15; 16,17) connect the compartments (6) for collecting the washing liquid from different sections of a washing stage with the compartments (10) introducing the washing liquid onto the pulp layer in the preceding washing stage in such a way that each pipe (12; 14; 16) beginning from the last section of said washing stage leads to the last section of the preceding washing stage and each pipe (13; 15; 17) beginning from the next to the last section leads to the next to the last section of the preceding washing stage, and so on.

8. Apparatus as claimed in claim 6 or 7, characterized in that there is a set of at least two pipes (12,13; 14,15; 16,17) leading from at least one washing stage to the preceding washing stage.

9. Apparatus as claimed in claim 6 or 7, characterized in that there are three sets of two pipes (12,13; 14,15; 16,17) leading from one washing stage to another in such a way that pipes (12, 13) lead from the fourth washing stage to the third one, pipes (14, 15) from the third washing stage to the second one and pipes (16, 17) from the second washing stage to the first one.

10. Apparatus as claimed in claim 6 or 7, characterized in that the length or circumferential measure respectively of the region of compartment (10) for supplying the washing liquid to the last washing stage is at least twice the measure of the other regions or compartments (10) for supplying the washing liquid.

## Revendications

1. Un procédé pour laver une pâte dans lequel la pâte est fournie sur une surface de support perméable aux liquides, mobile (2) en une couche essentiellement continue et dans lequel le liquide de lavage est fourni à ladite couche de pâte pour déplacer le liquide à partir de la couche de pâte en plusieurs étapes de lavage successives (10) d'une manière telle que la direction principale d'écoulement du liquide de lavage soit à l'opposé de la direction d'écoulement de la pâte, caractérisé en ce que au moins quelques unes desdites étapes de lavage sont divisées en au moins deux sections de lavage d'une manière telle que le liquide de lavage soit divisé dans la dernière étape de lavage telle en deux écoulements dérivés ou davantage qui sont disposés pour déplacer le liquide dans la couche de pâte dans lesdites sections de lavage où les écoulements dérivés recueillis séparément à partir desdites sections de lavage ont différent degré de propreté (différentes concentrations), en ce que les écoulements dérivés ainsi collectés sont disposés pour passer par au moins la section de lavage les précédant dans la direction d'écoulement de la couche de pâte d'une manière telle que les écoulements dérivés sont introduits dans l'étape de lavage précédente et que chaque partie du liquide de lavage soit disposée pour déplacer le liquide depuis la couche de pâte dans sa propre section de lavage.

2. Procédé selon la revendication 1, caractérisé en ce que ledit liquide de lavage est divisé en parties avant ou pendant le dernière étape de lavage par quoi toutes les étapes de lavage sont divisées en sections de lavage.

3. Procédé selon la revendication 1, caractérisé en ce que les parties du liquide de lavage collecté après la première étape de lavage sont collectées ensemble.

4. Procédé selon la revendication 1, oaractérisé en ce que ledit liquide de lavage est divisé en trois parties.

5. Procédé selon la revendication 1, caractérisé en ce que le lavage est réalisé avec un cylindre rotatif (1), dont la surface de gaine (2)sert de surface de support perméable aux liquides pour la pâte.

6. Appareil pour laver la pâte utilisant le procédé de la revendication 1 comprenant une surface de support perméable aux liquides (2), mobile pour supporter une couche essentiellement continue de pâte pour être lavée et des moyens pour fournir un liquide de lavage à la couche de pâte et pour distribuer un tel liquide à travers les différents domaines de la couche en plusieurs étapes de lavage successives d'une manière telle, qu'en fonctionnement, le liquide de lavage s'écoule graduellement dans la direction opposée par rapport à la direction du mouvement de la couche, où au moins un tuyau d'entrée (11) pour le liquide de lavage est connecté près du point de décharge pour la pâte qui a été lavée, des compartiments (6) sont disposés sous la surface de support (2) et dans lesquels, en fonctionnement, le liquide de lavage s'infiltrant à travers la pâte est collecté ; un système de tuyauterie qui est connecté aux compartiments (6) incluant les tuyaux (12 à 17)lesquels communiquent avec les différents compartiments (6) et sont connectés aux divers postes d'alimentation ou zones (10) par dessus la surface de support (2) de façon à fournir le liquide de lavage pendant l'opération en étapes de lavage successives auxdites zones (10) par quoi le liquide s'écoule dans la direction principalement opposée à la direction d'écoulement de la pâte, et un tuyau de décharge (22) via lequel le liquide de lavage est déchargé depuis l'appareil ; caractérisé en ce que les tuyaux (12 à 17) connectent les compartiments (6) sous la surface de support (2) et les zones (10) au-dessus de la surface de support (2) de sorte que les groupes de tuyaux (12,13:14,15 ; 16,17) interconnectent les compartiments (6) pour collecter le liquide de lavage à partir des différentes sections (phases) d'une étape de lavage avec les zones (10) pour introduire le liquide de lavage sur la couche de pâte dans l'étape de lavage précédente d'une manière telle que chaque tuyau (12 ; 14 ;16) d'un groupe commençant à partir de la dernière section de ladite étape de lavage conduise à la dernière section de l'étape de lavage précédente et que chaque tuyau (13;15;17) commençant à partir de la section voisine de la dernière section conduise à la voisine de la dernière section de l'étape de lavage précédente, et ainsi de suite, de façon conforme.

7. Appareil selon la revendication 6, comprenant un cylindre rotatif (1) ayant une surface de gaine perméable aux liquides (2) formant ladite surface de support perméable aux liquides ; une enveloppe stationnaire (8) s'étend parallèlement à l'arbre (4) du cylindre et entoure le cylindre de façon à permettre à la pâte de s'écouler en une dite couche continue (7) entre l'enveloppe (8) et le cylindre connectant ladite surface de gaine (2) et à travers laquelle enveloppe (8) le liquide de lavage peut être fourni à la couche de pâte, ledit au moins un tuyau d'entrée (11) pour le liquide de lavage étant connecté à l'enveloppe près du point de décharge pour la pâte qui a été lavée ; lesdits compartiments (6) étant disposés sous la surface de gaine (2) du cylindre, compartiments dans lesquels le liquide de lavage s'infiltrant à travers la pâte est collecté ; et un système vanne, qui est connecté aux compartiments (6) et comprend une partie rotative (18) qui peut tourner avec le cylindre et une partie stationnaire (21) disposée contre ladite partie rotative ; lesdits tuyaux (12 à 17) commençant à partir de ladite partie stationnaire (21), communiquent pendant

l'opération avec les différents compartiments (6) du cylindre et sont connectés à différents points dans l'enveloppe (8) entourant le cylindre (1) de façon à fournir le liquide de lavage pendant l'opération en étapes de lavage successives aux dits points par quoi le liquide s'écoule dans la direction principalement opposée à la direction de l'écoulement de la pâte ; et ledit tuyau de décharge (22) commençant à partir de ladite partie stationnaire (21), via lequel tuyau le liquide de lavage est déchargé de l'appareil, caractérisé en ce que les tuyaux (12 à 17) connectent au moyen du système vanne à la fois les compartiments (6) et l'enveloppe (8) de sorte que les tuyaux (12, 13;14,15; 16,17) connectent les compartiments (6) pour collecter le liquide de lavage depuis différentes sections d'une étape de lavage avec les compartiments (10) introduisant le liquide de lavage sur la couche de pâte dans l'étape de lavage précédente d'une manière telle que chaque tuyau (12;14;16) commençant à partir de la dernière section de ladite étape de lavage conduise à la dernière section de la précédente étape de lavage et que chaque tuyau (13;15;17) commençant à partir de la section voisine de la dernière section conduise à la voisine de la dernière section de l'étape de lavage précédente, et ainsi de suite.

8. Appareil selon la revendication 6 ou 7, caractérisé en ce qu'il y a un ensemble d'au moins deux tuyaux (12,13; 14,15; 16,17) conduisant d'au moins une étape de lavage à l'étape de lavage précédente.

9. Appareil selon la revendication 6 ou 7, caractérisé en ce qu'il y a trois ensembles de deux tuyaux (12,13; 14,15; 16,17) conduisant d'une étape de lavage à une autre d'une manière telle que les tuyaux (12,13) conduisent de la quatrième étape de lavage à la troisième, les tuyaux (14,15) de la troisième étape de lavage à la seconde et les tuyaux (16,17) de la seconde étape de lavage à la première étape.

10. Appareil selon la revendication 6 ou 7, caractérisé en ce que la longueur ou mesure périphérique respectivement de la région du compartiment (10) pour fournir le liquide de lavage à la dernière étape de lavage est au moins double de la mesure des autres régions ou compartiments (10) pour fournir le liquide de lavage.

## Ansprüche

1. Verfahren fürs Waschen von Pulpe, bei dem die Pulpe auf eine bewegliche flüssigkeitsdurchlässige Tragfläche (2) als hauptsächlich kontinuierliche Schicht aufgetragen wird und bei dem die Waschflüssigkeit in die genannte Pulpeschicht zur Verdrängung von Flüssigkeit aus der Pulpeschicht in mehreren aufeinanderfolgenden Waschstufen (10) in solcher Weise geleitet wird, daß die Hauptströmungsrichtung der Waschflüssigkeit zur Strömungsrichtung der Pulpe entgegengesetzt ist, dadurch gekennzeichnet, daß mindestens einige der genannten Waschstufen in mindestens zwei Waschabschnitte in solcher Weise geteilt sind, daß die Waschflüssigkeit im letzten solcher Waschabschnitte in zwei oder mehrere Teilströme geteilt wird, um die Flüssigkeit in der Pulpeschicht in den genannten Waschabschnitten zu verdrängen, wo die aus den genannten Waschabschnitten getrennt gesammelten Teilströme unterschiedliche Reinheitsgrade (unterschiedliche Konzentrationen) haben, daß die so gesammelten Teilströme so arrangiert sind, daß sie mindestens am denjenigen Waschabschnitt, der in der Strömungsrichtung der Pulpeschicht vor ihnen liegt in solcher Weise vorbeifließen, daß die Teilströme in die vorhergehende Waschstufe geleitet werden und jede Portion von Waschflüssigkeit so arrangiert ist, daß sie die Flüssigkeit aus der Pulpeschicht in ihrem eigenen Waschabschnitt verdrängt.

2. Verfahren gemäß Anspruch 1, dadurch gekennzeichnet, daß die genannte Waschflüssigkeit vor oder während der letzten Waschstufe in zwei Portionen aufgeteilt wird, wobei alle Waschstufen in Waschabschnitte aufgeteilt sind.

3. Verfahren gemäß Anspruch 1, dadurch gekennzeichnet, daß die nach der ersten Waschstufe angesammelten Portionen von Waschflüssigkeit zusammengesammelt werden.

4. Verfahren gemäß Anspruch 1, dadurch gekennzeichnet, daß die genannte Waschflüssigkeit in drei Portionen aufgeteilt wird.

5. Verfahren gemäß Anspruch 1, dadurch gekennzeichnet, daß das Waschen mit einem rotierenden Zylinder (1) ausgeführt wird, dessen Mantelfläche (2) als flüssigkeitsdurchlässige Tragfläche für Pulpe dient.

6. Vorrichtung fürs Waschen von Pulpe nach dem Verfahren gemäß Anspruch 1, bestehend aus einer austauschbaren, flüssigkeitsdurchlässigen Tragfläche (2) zur Aufnahme einer hauptsächlich kontinuierlichen Schicht der zu waschender Pulpe und Mitteln zur Aufgabe von Waschflüssigkeit in die Pulpeschicht und zur Leitung solcher Flüssigkeit durch verschiedene Bereiche der Schicht in mehreren aufeinanderfolgenden Waschstufen in solcher Weise, daß die Waschflüssigkeit im Betrieb allmählich in der zur Bewegungsrichtung der Schicht entgegengesetzten Richtung fließt, wobei mindestens ein Eintrittsrohr (11) für Waschflüssigkeit in der Nähe der Ablaufstelle für gewaschene Pulpe angeschlossen ist, Kammern (6) unter der Tragfläche (2) angeordnet sind, in welchen Kammern im Betrieb die durch die Pulpe sickernde Waschflüssigkeit gesammelt wird; einem mit den Kammern (6) verbundenen Kanalsystem mit den Rohren (12 bis 17), die mit verschiedenen Kammern (6) in Verbindung stehen und mit verschiedenen Eingabestationen oder -bereichen (10) oberhalb der Tragfläche (2) verbunden sind, um die Waschflüssigkeit betriebsmäßig in aufeinanderfolgende Waschstufen in den genannten Bereichen (10) einzugeben, wobei die Flüssigkeit in einer zur Strömungsrichtung der Pulpe hauptsächlich entgegengesetzten Richtung fließt, und einem Ablaufrohr (22), durch das die Waschflüssigkeit aus der Vorrichtung abgeleitet wird; dadurch gekennzeichnet, daß die Rohre (12 bis 17) die Kammern unter der Tragfläche (2) und die Bereiche (10) oberhalb der Tragfläche (2) derart verbinden, daß Gruppen von Rohren (12, 13; 14, 15; 16, 17) die Kammern (6) miteinander verbinden, fürs Einsammeln der der Waschflüssigkeit aus den verschiedenen Abschnitten (Phasen) einer Waschstufe mit den Bereichen (10) zur Aufgabe der Waschflüssigkeit auf die Pulpeschicht in der vorhergehenden Waschstufe in solcher Weise, daß jedes Rohr (12; 14; 16) einer Gruppe, das am letzten Abschnitt der genannten Waschstufe beginnt, zum letzten Abschnitt der vorhergehenden Waschstufe führt und jedes am vorletzten Abschnitt beginnende Rohr (13; 15; 17) zum vorletzten Abschnitt der vorhergehenden Waschstufe führt usw.

7. Vorrichtung gemäß Anspruch 6, bestehend aus einem rotierenden Zylinder (1) mit einer flüssigkeitsdurchlässigen Mantelfläche (2), die die genannte flüssigkeitsdurchlässige Tragfläche bildet; einer stationären Hülle (8) die parallel zur Welle (4) des Zylinders verläuft und das Zylinder umschließt, wodurch die Pulpe als genannte kontinuierliche Schicht (7) zwischen der Hülle (8) und dem Zylinder fließt, das die genannte Mantelfläche (2) verbindet, und durch welche Hülle (8) der Pulpeschicht Waschflüssigkeit zugeführt werden kann, wobei das genannte mindestens eine Eintrittsrohr (11) für Waschflüssigkeit in der Nähe der Ablaufstelle für gewaschene mit der Hülle verbunden ist; die genannten Kammern (6) unter der Mantelfläche (2) des Zylinders angeordnet sind, in welchen Kammern die durch die Pulpe sickernde Waschflüssigkeit gesammelt wird; und einem Ventilsystem, das mit den Kammern (6) verbunden ist und einen umlaufenden Teil (18), das mit dem Zylinder drehbar ist und einen gegenüber dem genannten drehbaren Teil angeordneten stationären Teil (21) umfaßt; wobei die genannten am genannten stationären Teil beginnenden Rohre (12 bis 17) im Betrieb mit verschiedenen Kammern (6) des Zylinders (1) in Verbindung stehen und mit verschiedenen Stellen der das Zylinder (1) umschließenden Hülle (8) verbunden sind, um die Waschflüssigkeit betriebsmäßig an den genannten Stellen in aufeinanderfolgenden Waschstufen einzugeben, wobei die Flüssigkeit in der zur Strömungsrichtung der Pulpe hauptsächlich entgegengesetzten Richtung fließt; und das genannte Ablaufrohr (22) am genannten stationären Teil (21) beginnt, durch welches Rohr die Waschflüssigkeit aus der Vorrichtung entfernt wird, dadurch gekennzeichnet, daß die Rohre (12 bis 17) über das Ventilsystem sowohl die Kammern (6) und die Hülle (8) verbinden, so das die Rohre (12,13; 14,15; 16,17) die Kammern (6) fürs Einsammeln der Waschflüssigkeit aus den verschiedenen Abschnitten einer Waschstufe verbinden, wobei die Kammern (10) die Waschflüssigkeit auf die Pulpeschicht in der vorhergehenden Waschstufe in solcher Weise eingeben, daß jedes am letzten Abschnitt der genannten Waschstufe beginnende Rohr (12; 14; 16) zum letzten Abschnitt der vorhergehenden Waschstufe führt und jedes am vorletzten Abschnitt beginnenden Rohr (13; 15; 17) zum vorletzten Abschnitt der vorhergehenden Waschstufe führt usw.

8. Vorrichtung gemäß Anspruch 6 oder 7, dadurch gekennzeichnet, daß sie einen Satz mit mindestens zwei Rohren (12,13; 14,15; 16,17) aufweist, der aus mindestens einer Waschstufe zur vorhergehenden Waschstufe führt.

9. Vorrichtung gemäß Anspruch 6 oder 7, dadurch gekennzeichnet, daß sie drei Sätze mit zwei Rohren (12,13; 14,15; 16,17) aufweist, die von Waschstufe zu Waschstufe in solcher Weise führen, daß Rohre (12, 13) von der vierten zur dritten Waschstufe, Rohre (14, 15) von der dritten zur zweiten Waschstufe und Rohre (16, 17) von der zweiten zur ersten Waschstufe führen.

10. Vorrichtung gemäß Anspruch 6 oder 7, dadurch gekennzeichnet, daß die Länge bzw. der Umfang des Abschnitts von Kammer (10) zur Eingabe von Waschflüssigkeit in die letzte Waschstufe mindestens zweimal größer sind als die Maße der anderen Abschnitte oder Kammern (10) zur Eingabe von Waschflüssigkeit.

Fig.1

**Fig. 2**

Fig.3

EP 0 239 312 B1